# EUROPÄISCHE PATENTSCHRIFT

(11) **EP 4 034 839 B1**
(45) Veröffentlichungstag und Bekanntmachung des Hinweises auf die Patenterteilung: **26.02.2025**
(21) Anmeldenummer: 20768527.2
(22) Anmeldetag: 01.09.2020
(51) Int. Cl.: G01C 21/20, G01C 21/34, G01C 21/36, H04W 4/40

(54) **VERFAHREN UND FAHRZEUG MIT EINER EINRICHTUNG ZUM AUFFINDEN DES FAHRZEUGS**
METHOD AND VEHICLE HAVING A DEVICE FOR FINDING THE VEHICLE
PROCÉDÉ ET VÉHICULE ÉQUIPÉ D'UN DISPOSITIF DE LOCALISATION DU VÉHICULE

(30) Priorität: 25.09.2019 DE 102019214660
(43) Veröffentlichungstag der Anmeldung: 03.08.2022
(73) Patentinhaber: VOLKSWAGEN AKTIENGESELLSCHAFT, 38440 Wolfsburg (DE)
(72) Erfinder: KNIGGE, Natascha, 38102 Braunschweig (DE); BERLINECKE, Michael, 29378 Wittingen (DE); BENDEWALD, Lennart, 38442 Wolfsburg (DE)
(86) Internationale Anmeldenummer: PCT/EP2020/074352
(87) Internationale Veröffentlichungsnummer: WO 2021/058239

(56) Entgegenhaltungen:
- EP-A1- 2 985 569
- DE-A1- 102014 222 204
- DE-A1- 102015 226 697
- DE-A1- 102017 218 525
- US-A1- 2009 058 685
- US-A1- 2018 321 050

## Beschreibung

Die vorliegende Erfindung betrifft ein Verfahren zum Auffinden eines Fahrzeugs, wobei das Fahrzeug eine Einrichtung mit einer Umfeldsensorik aufweist, mit der die Zugangsberechtigung eines Nutzers in das Fahrzeug sowie dessen Position festgestellt wird, wobei die Einrichtung mittelbar oder unmittelbar mit einem Lautsprecher verbunden ist, der akustische Signale erzeugt, um den Nutzer bei gegebener Zugangsberechtigung entlang einer Route zum Standort des Fahrzeugs zu navigieren.

Die Entwicklung von autonom und fahrerlos fahrenden Fahrzeugen ist derzeit eines der zentralen Themen bei der Betrachtung der zukünftigen Mobilität in der Automobilindustrie. Der Einsatz solcher fahrerlosen Fahrzeuge ist dabei vielfältig. Als Shared-Mobility-Fahrzeug können solche Fahrzeuge ähnlich wie ein Taxi gerufen werden und sind für jedermann als öffentliches Verkehrsmittel zugänglich. Beim Einsatz als Owned-Mobility-Fahrzeug können individuelle Aufgaben vom Fahrzeug erledigt werden, wie z.B. Einkäufe transportieren, Kinder zur Schule bringen, Besucher vom Bahnhof abholen und vieles mehr.

Neben den technologischen Herausforderungen und den rechtlichen Anforderungen eröffnet das fahrerlose Fahren neue Perspektiven der Mobilität. Mit der Erhöhung der Fahrzeugsicherheit im Straßenverkehr steht vor allem die optimale Nutzung der Infrastruktur im Vordergrund. Die Bewältigung der steigenden Verkehrsdichte im städtischen Innenraum und die Reduktion von Emissionen durch eine ökonomische Fahrweise sind weitere Treiber für die Entwicklung automatisierter Fahrfunktionen.

Für die Nutzer ergeben sich zusätzlich neue Möglichkeiten, die Zeit während der Fahrt zu nutzen und dabei fahrfremde Tätigkeiten auszuführen. Die selbstfahrenden Fahrzeuge ermöglichen vor allem auch Mobilität für jedermann, wie z.B. Kinder, ältere Menschen oder Menschen mit körperlichen Beeinträchtigungen. Insbesondere körperlich beeinträchtigten Personen mit einer Sehbehinderung steht der Zugang sowohl an Shared-Mobility-Fahrzeugen als auch am Owned-Mobility-Fahrzeugen gegenwärtig nur unzureichend zur Verfügung, weil die Fahrzeuge von Personen mit einer Sehbehinderung nicht ohne Weiteres aufgefunden werden. Aus DE 10 2015 226 238 A1 sind zwar Fahrzeuge bekannt, die den Weg zwischen einem Fahrzeug und dem Nutzer ausleuchten, um das Fahrzeug leichter auffinden zu können, allerdings hilft das Ausleuchten des Weges nicht weiter, wenn die Markierungen aufgrund der Sehbehinderung nicht erkannt und wahrgenommen werden.

Ein gattungsgemäßes Verfahren wird in US 2018/0321050 A1 offenbart. Ferner sind vergleichbare Verfahren aus US 2009/058685 A1, EP 2 985 569 A1 und DE 10 2017 218 525 A1 bekannt. Weitere gattungsfremde Verfahren sind aus DE 10 2015 226697 A1 und DE 10 2014 222204 A1 bekannt.

Es ist daher die Aufgabe der vorliegenden Erfindung, ein Verfahren und eine Vorrichtung anzugeben, die insbesondere sehbehinderten Personen den Zugang zur autonomen Mobilität erleichtert.

Diese Aufgabe wird durch das Verfahren nach Anspruch 1 gelöst. Ausgehend von einem ein Verfahren zum Auffinden eines Fahrzeugs, wobei das Fahrzeug eine Einrichtung mit einer Umfeldsensorik aufweist, mit der die Zugangsberechtigung eines Nutzers in das Fahrzeug sowie dessen Position festgestellt wird, wobei die Einrichtung mittelbar oder unmittelbar mit einem Lautsprecher verbunden ist, der akustische Signale erzeugt, um den Nutzer bei gegebener Zugangsberechtigung entlang einer Route zum Standort des Fahrzeugs zu navigieren, ist erfindungsgemäß vorgesehen, dass der Einstieg des Nutzers in das Fahrzeug mittels des Lautsprechers sprachassistiert erfolgt, der unmittelbar mit der Einrichtung verbunden ist, indem einstiegsrelevante Zustände des Fahrzeugs, nämlich "Die Tür öffnet sich" oder "Achtung: Stufe zum Einstieg nach oben", per Sprachausgabe beschrieben werden. Weil auch sehbehinderte Personen solche akustischen Signale aufnehmen und den Anweisungen folgen können, haben auch sehbehinderte Personen durch die vorliegende Erfindung uneingeschränkten Zugang zu autonom gesteuerten Fahrzeugen unabhängig davon, ob sie als Shared-Mobility-Fahrzeug oder als Owned-Mobility-Fahrzeug ausgebildet sind.

Bevorzugte Ausführungsformen der vorliegenden Erfindung werden nachfolgend und in den Unteransprüchen angegeben.

Nach einer ersten vorteilhaften Ausführungsform der Erfindung ist vorgesehen, dass die Einrichtung zur Feststellung der Zugangsberechtigung drahtlos mit einem mobilen Endgerät des Nutzers verbunden ist. Ein solches mobiles Endgerät kann beispielsweise ein Smartphone oder ein Tablet sein, auf dem eine Applikation (App) installiert ist, über die die Korrespondenz mit dem Fahrzeug erfolgt. Über diese Applikation kann das Fahrzeug angefordert werden, wobei unmittelbar der aktuelle Standort übermittelt werden kann, an dem das Fahrzeug den Benutzer abholen soll. Auch Bezahloptionen können bei der Nutzung eines Shared-Mobility-Fahrzeugs über die Applikation abgewickelt werden, nachdem die Fahrt abgeschlossen wurde.

Nach einer vorteilhaften Ausführungsform der Erfindung ist vorgesehen, dass die akustischen Signale in Form einer Sprachausgabe an dem mobilen Endgerät erfolgen, wobei die Sprachausgabe eine detaillierte Navigation zum Fahrzeug enthält. Insbesondere an Orten oder in Verkehrssituationen, bei denen das Fahrzeug den Nutzer nicht unmittelbar an seinem Standort abholen kann, sondern bei denen der Nutzer eine bestimmte Strecke zum Fahrzeug eigenständig zurücklegen muss, kann hierdurch insbesondere dem sehbehinderten Nutzer mitgeteilt werden, wie er von seinem aktuellen Standort zu seinem bzw. dem angeforderten Fahrzeug gelangt. Insbesondere in Fußgängerzonen, an Flughäfen und in Bahnhöfen können sich hierdurch sehbehinderte Personen sicher orientieren, was den Aktionsradius um ein Vielfaches erhöht. In der Praxis wird dabei die Sprachausgabe beispielsweise so erfolgen, dass den Nutzern der Weg zum Fahrzeug beschrieben wird, wie beispielsweise: "50 m gerade aus... in 10 m links abbiegen... in 50 m befindet sich das Fahrzeug auf der rechten Gehwegseite".

Um dabei den optimalen Weg für den Nutzer feststellen zu können, ist nach einer bevorzugten Ausgestaltung der Erfindung vorgesehen, dass das mobile Endgerät und/oder das Fahrzeug zur Navigation des Nutzers mit einem online verfügbaren Kartendienst verbunden ist.

Für Nutzer, die unter keiner Beeinträchtigung des Sehvermögens leiden, ist nach einer vorteilhaften Ausführungsform der Erfindung vorgesehen, dass die Route zum Fahrzeug auf einer Karte auf einem Display des mobilen Endgerätes angezeigt wird. Alternativ ist auch eine Darstellung als augmentierte Information auf dem Kamerabild des mobilen Endgerätes vorgesehen. In beiden Fällen lassen sich hierdurch die angeforderten Fahrzeuge leicht identifizieren und auffinden.

Sobald der Nutzer in unmittelbarer Nähe des Fahrzeugs ist, beispielsweise innerhalb eines Umkreises von 20 m, kann auf eine Sprachausgabe am mobilen Endgerät verzichtet werden und die akustischen Signale in Form einer Sprachausgabe oder in Form eines Signaltons können über einen Lautsprecher abgegeben werden, der unmittelbar am Fahrzeug angeordnet ist und mit der Einrichtung verbunden ist. Neben einer Sprachausgabe in der Form der zuvor erläuterten Wegbeschreibung kann auch ein Signalton in Form eines Pieptons die Position des angeforderten Fahrzeugs anzeigen. Der vom Fahrzeug abgegebene Piepton kann nach einer vorteilhaften Ausgestaltung der Erfindung vom Nutzer selbst mittels der Applikation vorgegeben mit mithin personalisiert sein, so dass im Falle von mehreren sehbehinderten Personen eine eindeutige Zuordnung der Fahrzeuge gegeben ist.

Erfindungsgemäß ist vorgesehen, dass der Einstieg des Nutzers in das Fahrzeug sprachassistiert erfolgt, indem einstiegsrelevante Zustände des Fahrzeugs per Sprachausgabe beschrieben werden, nämlich "Die Tür öffnet sich", oder "Achtung: Stufe zum Einstieg nach oben". Konkrete Ausführungsformen der vorliegenden Erfindung werden nachfolgend anhand der Figuren beschrieben. Es zeigen:
- Fig. 1: ein Fahrzeug und ein mobiles Endgerät und
- Fig. 2: einen Kartenausschnitt.

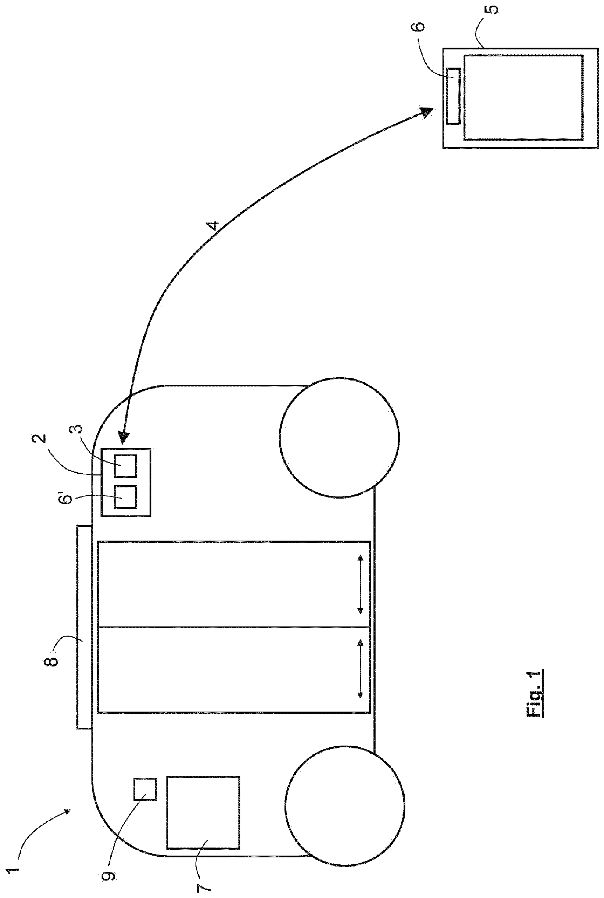

Das in Fig. 1 dargestellte Fahrzeug 1 ist ein autonom fahrendes Fahrzeug 1, das als Shared-Mobility-Fahrzeug in die Flotte öffentlicher Verkehrsmittels eingebunden ist. Das Fahrzeug 1 besitzt eine Einrichtung 2, die mit einer Umfeldsensorik 3 ausgestattet ist. Über die Umfeldsensorik 3 kann eine drahtlose Verbindung 4 zu einem mobilen Endgerät 5 eines (nicht dargestellten) Nutzers hergestellt werden, der über eine hierauf installierte Applikation das Fahrzeug 1 anfordern kann. Sobald sich das Fahrzeug 1 in der Nähe des Nutzers befindet, erfolgt eine sprachassistierte Navigation zum Fahrzeug 1, indem eine entsprechende Wegbeschreibung und konkrete Handlungsanweisungen am Lautsprecher 6 des mobilen Endgerätes ausgegeben werden. Um den Einstieg in das Fahrzeug 1, insbesondere für sehbehinderte Nutzer zu erleichtern, ist ein weiterer Lautsprecher 6' unmittelbar am Fahrzeug angeordnet, über die weitere Anweisungen beim Zustieg in das Fahrzeug 1 abgegeben werden. Für nicht sehbehinderte Personen besitzt das Fahrzeug 1 mindestens ein Display 7 und/oder mindestens eine LED-Leiste 8, womit die Position des Fahrzeugs 1 visuell dargestellt werden kann. Es sind auch Projektoren 9 vorgesehen, die den Weg vom aktuellen Standort des Nutzers zum Fahrzeug 1 ausleuchten, was insbesondere bei dunklen Sichtverhältnissen in der Nacht oder in Parkhäusern vorteilhaft ist. Auch kann der Einstiegsbereich mittels solcher Projektoren 9 ausgeleuchtet werden, was den Zustieg in das Fahrzeug 1 erleichtert.

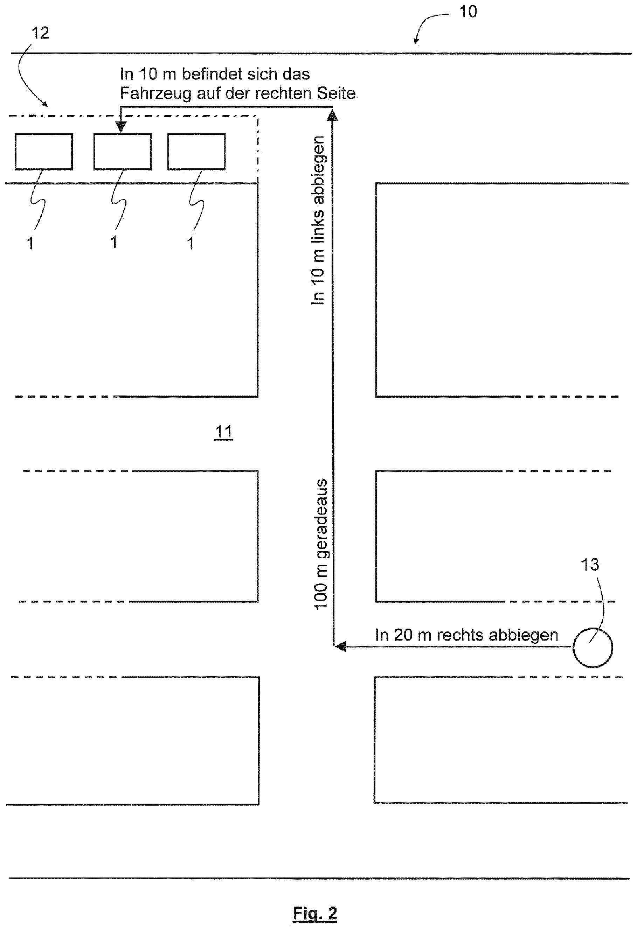

Fig. 2 zeigt einen Kartenausschnitt 10 einer Fußgängerzone 11, die für den Autoverkehr gesperrt ist. Angrenzend zur Fußgängerzone 11 befindet sich ein Taxistand 12, an dem mehrere autonom fahrende Fahrzeuge 1 warten, um etwaige Nutzer abzuholen. Ein sehbehinderter Nutzer 13 kann mittels eines mobilen Endgerätes 5 ein solches Fahrzeug 1 von einer beliebigen Position anfordern. Dem Fahrzeug 1 wird über eine drahtlose Kommunikationsverbindung 4 der Standort des Nutzers 13 mitgeteilt und es erfolgt eine Berechnung der direkten Route vom aktuellen Standort des Nutzers 13 zum angeforderten Fahrzeug 1. Die Wegbeschreibung bzw. die Anweisungen zur Wegführung werden anschließend über den Lautsprecher 6 des mobilen Endgerätes 5 abgegeben, bis der Nutzer 13 an dem Fahrzeug 13 angelangt ist und dort zusteigen kann.

### Bezugszeichenliste

- 1: Fahrzeug
- 2: Einrichtung
- 3: Umfeldsensorik
- 4: drahtlose Kommunikationsverbindung
- 5: mobiles Endgerät
- 6, 6': Lautsprecher
- 7: Display
- 8: LED-Leiste
- 9: Projektor
- 10: Kartenausschnitt
- 11: Fußgängerzone
- 12: Taxistand
- 13: Nutzer

## Patentansprüche

1. Verfahren zum Auffinden eines Fahrzeugs (1), wobei das Fahrzeug eine Einrichtung (2) mit einer Umfeldsensorik (3) aufweist, mit der die Zugangsberechtigung eines Nutzers (13) in das Fahrzeug (1) sowie dessen Position festgestellt wird, wobei die Einrichtung (2) mittelbar oder unmittelbar mit einem Lautsprecher (6, 6') verbunden ist, der akustische Signale erzeugt, um den Nutzer (13) bei gegebener Zugangsberechtigung entlang einer Route zum Standort des Fahrzeugs (1) zu navigieren, **dadurch gekennzeichnet, dass** der Einstieg des Nutzers (13) in das Fahrzeug (1) mittels des Lautsprechers (6') sprachassistiert erfolgt, der unmittelbar mit der Einrichtung (2) verbunden ist, indem einstiegsrelevante Zustände des Fahrzeugs (1), nämlich "Die Tür öffnet sich" oder "Achtung: Stufe zum Einstieg nach oben", per Sprachausgabe beschrieben werden.

2. Verfahren nach Anspruch 1, **dadurch gekennzeichnet, dass** die Einrichtung (2) zur Feststellung der Zugangsberechtigung drahtlos mit einem mobilen Endgerät (5) des Nutzers (13) verbunden ist.

3. Verfahren nach einem der Ansprüche 1 oder 2, **dadurch gekennzeichnet, dass** die akustischen Signale in Form einer Sprachausgabe an dem mobilen Endgerät (5) erzeugt werden, wobei die Sprachausgabe eine detaillierte Navigation zum Fahrzeug (1) enthält.

4. Verfahren nach einem der Ansprüche 1 bis 3, **dadurch gekennzeichnet, dass** das mobile Endgerät (5) und/oder das Fahrzeug (1) zur Navigation des Nutzers (13) mit einem online verfügbaren Kartendienst verbunden ist.

5. Verfahren nach einem der Ansprüche 1 bis 4, **dadurch gekennzeichnet, dass** die Route zum Fahrzeug (1) auf einer Karte auf einem Display des mobilen Endgerätes (5) angezeigt wird.

6. Verfahren nach einem der Ansprüche 1 bis 5, **dadurch gekennzeichnet, dass** die akustischen Signale in Form einer Sprachausgabe oder eines Signaltons über einen Lautsprecher (6') abgegeben werden, der unmittelbar am Fahrzeug (1) angeordnet und mit der Einrichtung (2) verbunden ist.

## Claims

1. Method for locating a vehicle (1), the vehicle comprising a device (2) having an environment sensor system (3) by means of which the access authorization of a user (13) to the vehicle (1) and its position are determined, the device (2) being indirectly or directly connected to a loudspeaker (6, 6') which generates acoustic signals in order to navigate the user (13) along a route to the location of the vehicle (1) if access authorization is granted, **characterized in that** the entry of the user (13) into the vehicle (1) is voice-assisted by means of the loudspeaker (6'), which is directly connected to the device (2), by describing entry-relevant states of the vehicle (1), namely "The door is opening" or "Attention: step for entry upwards", via voice output.

2. Method according to claim 1, **characterized in that** the device (2) for determining the access authorization is wirelessly connected to a mobile terminal (5) of the user (13).

3. Method according to either of claims 1 or 2, **characterized in that** the acoustic signals are generated in the form of a voice output on the mobile terminal (5), the voice output containing detailed navigation to the vehicle (1).

4. Method according to any of claims 1 to 3, **characterized in that** the mobile terminal (5) and/or the vehicle (1) is connected to a map service available online for navigation of the user (13).

5. Method according to any of claims 1 to 4, **characterized in that** the route to the vehicle (1) is displayed on a map on a display of the mobile device (5).

6. Method according to any of claims 1 to 5, **characterized in that** the acoustic signals are emitted in the form of a voice output or a signal tone via a loudspeaker (6') which is arranged directly on the vehicle (1) and connected to the device (2).

## Revendications

1. Procédé permettant de localiser un véhicule (1), dans lequel le véhicule présente un dispositif (2) comportant un système de capteurs d'environnement (3), avec lequel l'autorisation d'accès d'un utilisateur (13) dans le véhicule (1) ainsi que sa position sont déterminées, dans lequel le dispositif (2) est connecté directement ou indirectement à un haut-parleur (6, 6') qui produit des signaux acoustiques afin de guider l'utilisateur (13), pour une autorisation d'accès donnée, le long d'un itinéraire jusqu'à l'emplacement du véhicule (1), **caractérisé en ce que** l'entrée de l'utilisateur (13) dans le véhicule (1) est effectuée par assistance vocale au moyen du haut-parleur (6`) qui est directement connecté au dispositif (2) par le fait que des états du véhicule (1) relatifs à l'entrée, à savoir « La porte s'ouvre » ou « Attention : marche lors de l'entrée vers le haut », sont décrits par sortie vocale.

2. Procédé selon la revendication 1, **caractérisé en ce que** le dispositif (2) pour la détermination de l'autorisation d'accès est connecté sans fil à un terminal mobile (5) de l'utilisateur (13).

3. Procédé selon l'une des revendications 1 ou 2, **caractérisé en ce que** les signaux acoustiques sont générés sous la forme d'une sortie vocale au niveau du terminal mobile (5), dans lequel la sortie vocale comprend un guidage détaillé vers le véhicule (1).

4. Procédé selon l'une des revendications 1 à 3, **caractérisé en ce que** le terminal mobile (5) et/ou le véhicule (1) sont connectés à un service de cartographie disponible en ligne pour le guidage de l'utilisateur (13).

5. Procédé selon l'une des revendications 1 à 4, **caractérisé en ce que** l'itinéraire vers le véhicule (1) est affiché sur une carte sur un écran du terminal mobile (5).

6. Procédé selon l'une des revendications 1 à 5, **caractérisé en ce que** les signaux acoustiques sont émis sous la forme d'une sortie vocale ou d'un signal sonore par l'intermédiaire d'un haut-parleur (6`) qui est disposé directement sur le véhicule (1) et qui est connecté au dispositif (2).
